# EUROPÄISCHE PATENTANMELDUNG

(11) **EP 1 544 376 A2**
(43) Veröffentlichungstag der Anmeldung: **22.06.2005**
(21) Anmeldenummer: 04025905.3
(22) Anmeldetag: 04.11.2004
(51) Int. Cl.: E04G 11/06, E04G 11/28

(54) **Innenschalungsabschnitt zur Errichtung eines Bauwerksabschnitts**

(30) Priorität: 19.12.2003 AT 20532003
(71) Anmelder: RUND-STAHL-BAU GESELLSCHAFT M.B.H., A-6972 Fussach (AT)
(72) Erfinder: Mathis, Hugo, Dipl.-Ing., 6900 Bregenz (AT)
(74) Vertreter: Hefel, Herbert, Dipl.-Ing.

(57) **Zusammenfassung**

Ein Innenschalungsabschnitt zur Errichtung eines Bauwerksabschnitts (4) mit einer umfangsgeschlossenen Betonwand (42), deren Umfang über die Höhe des Bauwerksabschnitts (4) zu- oder abnimmt, umfasst ein umfangsgeschlossenes Hauptteil (5), dessen Umfang an seinem oberen Ende größer oder kleiner als an seinem unteren Ende ist, und einen am oberen Ende des Hauptteils (5) lösbar an diesem befestigten Kletterring (6). Das Hauptteil (5) weist eine Mehrzahl von in Umfangsrichtung aneinander anschließenden, lösbar miteinander verbundenen Streifenelementen (9) auf, von denen zumindest einige über ihre Höhe zunehmende oder abnehmende Breiten aufweisen. Mindestens ein in der Einsatzstellung des Innenschalungsabschnitts in einer horizontalen Ebene liegender und auf der von der zu errichtenden Betonwand (42) abgewandten Seite der Streifenelemente (9) verlaufender Druckaufnahmering (24) ist mit zumindest einigen, vorzugsweise mit allen, der Streifenelemente (9) lösbar verbunden.

## Beschreibung

Die Erfindung betrifft einen Innenschalungsabschnitt zur Errichtung eines Bauwerksabschnitts mit einer umfangsgeschlossenen Betonwand, deren Umfang über die Höhe des Bauwerksabschnitts zu- oder abnimmt, wobei der Innenschalungsabschnitt einen umfangsgeschlossenen Hauptteil, dessen Umfang an seinem oberen Ende größer oder kleiner als an seinem unteren Ende ist, und einen am oberen Ende des Hauptteils lösbar an diesem befestigten Kletterring aufweist. Weiters betrifft die Erfindung ein Innenschalungssystem zur Errichtung eines Bauwerks in mehreren Betonierschritten, in welchen jeweils ein Bauwerksabschnitt mit Hilfe eines aus dem Innenschalungssystem gebildeten Innenschalungsabschnittes errichtet wird, wobei zumindest einige der Bauwerksabschnitte einen über ihre Höhe zu- oder abnehmenden Umfang aufweisen und der zugehörige Innenschalungsabschnitt einen umfangsgeschlossenen Hauptteil, dessen Umfang an seinem oberen Ende größer oder kleiner als an seinem unteren Ende ist, und einen am oberen Ende des Hauptteils lösbar an diesem befestigten Kletterring aufweist

Im Zusammenhang mit der Errichtung von Rundbauten sind Kletterschalungen bekannt, bei denen zwei umfangsgeschlossene Schalungsringe an einem Traggerüst aufgehängt werden. Der von den Schalungsringen begrenzte Schalungshohlraum wird mit Beton gefüllt, nach dem Erhärten oder Abbinden des Betons werden die Schalungsringe gelöst und am Traggerüst so weit hochgefahren, dass ihr unterer Teil noch im Bereich der Oberkante des gegossenen Mauerringes liegt. Dann werden die Ringe neuerlich festgespannt und fixiert, Beton wiederum eingefüllt und das erwähnte Wechselspiel wiederholt sich, bis die gewünschte Bauhöhe erreicht ist. Auf diese Weise wird bei solchen zylindrischen Bauten ein Mauerring auf den anderen gesetzt.

Ein weiterer Typ einer Kletterschalung ist beispielsweise in der US-PS 1 478 653 gezeigt und beschrieben. Das Wesen einer solchen Kletterschalung liegt darin, dass hier das Mauerwerk durchdringende Schalungsanker vorzusehen sind, an und mit welchen die Schalungselemente in ihrer Gesamtheit verspannt werden, wobei die bei einem Betonierschritt jeweils oben einbetonierten Anker in der Folge als Fußanker für die Schalung im nächsten Betonierschritt verwendet werden. In jedem Betonierschritt wird dann ein neuer Anker eingebaut. Die Schalung wird dann hochgesetzt, wenn der vorausgegangene betonierte Mauerabschnitt abgebunden hat, da er über die Schalungsanker das gesamte Gewicht der Schalung zu tragen hat. Die Schalung selbst besteht aus den eigentlichen Schalungstafeln und dem die Schalungstafeln versteifenden Gerüst.

Ein Innenschalungsabschnitt der eingangs genannten Art ist aus der EP 1 156 175 A2 bekannt. Zur Errichtung eines Bauwerks mit einer kegelstumpfförmigen Form ist für jeden der Bauwerkabschnitte ein eigener Innenschalungsabschnitt vorhanden, dessen Außenkontur der Innenkontur des Abschnitts der auszubildenden Betonwand entspricht. Es liegen hierbei alle für die Errichtung des Bauwerks erforderlichen Innenschalungsabschnitte vollständig vor und übereinander gestellt würde ihre Außenkontur der Innenkontur der gesamten zu erstellenden Betonwand entsprechen. Durch das aus dieser Schrift bekannte Verfahren können mehrere in gleichzeitiger Bautätigkeit herzustellende gleichartige Bauwerke rasch errichtet werden. Nachteilig ist der relativ hohe Materialverbrauch für die gesamte Innenschalung.

Aus der EP 960 986 A2 ist eine Innenschalung bekannt, welche aus einzelnen Schalungsabschnitten ("Stahlrohrschüssen") besteht. Die Stahlrohrschüsse werden von in Umfangsrichtung aneinander anschließenden Streifenelementen gebildet, die über ihre Höhe in der Breite abnehmen. Die Streifenelemente werden vor Ort zu den Innenschalungsabschnitten (Schalungsrohrschüssen) zusammengebaut und übereinander montiert, bis die angestrebte Höhe des Bauwerks erreicht ist. Vorzugsweise nach Montage jedes Stahlrohrschusses wird der Ringraum zwischen den äußeren Schalungsrohrschüssen und den inneren Schalungsrohrschüssen mit Fertigbeton verfüllt. Insgesamt ist die Schalung als verlorene Schalung ausgebildet und kann hierbei auch statisch mittragend sein. Solche verlorenen Schalungen bzw. statisch mittragenden Schalungen weisen verschiedene Nachteile auf, beispielsweise im Hinblick auf den Materialaufwand, da die Schalung im Bauwerk verbleibt und nicht für ein anderes Bauwerk wiederum eingesetzt werden kann.

Aus der GB 697 427 A ist eine Schalung zur Herstellung von horizontalen Röhren von Tunnels und dergleichen bekannt. Es geht also nicht um die Errichtung eines Bauwerks, dessen Umfang in der Höhe zu- oder abnimmt. Bei der Betonierung von Tunnelwänden treten andere Probleme als bei der Herstellung von Bauwerken auf, welche im Laufe ihrer Errichtung eine zunehmende Höhe aufweisen, beispielsweise hinsichtlich der fortlaufenden Anbringung der Schalung.

Die US 4,577,727 B zeigt eine Schalung zur Errichtung von kreisförmigen Bauwerken, bei der eine Arbeitsplattform an verschiedene Durchmesser des Bauwerks angepasst werden kann. Die Innenschalung dieser Schalung umfasst einen Druckaufnahmering, der die Schalhaut nach innen abstützt.

Aufgabe der Erfindung ist es, einen Innenschalungsabschnitt bzw. ein Innenschalungssystem der eingangs genannten Art bereitzustellen, durch den, bzw. durch das eine Materialeinsparung erreicht wird. Erfindungsgemäß gelingt dies durch einen Innenschalungsabschnitt mit den Merkmalen des Patentanspruchs 1 bzw. durch ein Innenschalungssystem mit den Merkmalen des Patentanspruchs 13.

Bei einem erfindungsgemäßen Innenschalungsabschnitt bzw. Innenschalungssystem können zumindest Teile eines bei der Errichtung eines Bauwerksabschnitts eingesetzten Innenschalungsabschnitts zur Ausbildung eines bei der Errichtung eines weiteren Bauwerksabschnitts benötigten Innenschalungsabschnitts eingesetzt werden, wodurch der Materialaufwand verringert wird. Der Innenschalungsabschnitt kann dabei in ausreichendem Maß den vom Beton beim Betonieren ausgeübten Druck aufnehmen. Ein erfindungsgemäßer Innenschalungsabschnitt bzw. ein erfindungsgemäßes Innenschalungssystem ermöglicht weiters einen raschen und vorteilhaften Herstellungsvorgang der einzelnen Bauwerksabschnitte des Bauwerks.

Weitere Vorteile und Einzelheiten der Erfindung werden im Folgenden anhand der beiliegenden Zeichnung erläutert. In zeigen:
- Fig. 1: eine schematische Ansicht eines Windturms mit einem kegelstumpfförmigen Stahlbetonturm;
- Fig. 2: eine vereinfachte perspektivische Darstellung (Ansicht von schräg oben) eines Ausführungsbeispiels eines erfindungsgemäßen Innenschalungsabschnitts;
- die Fig. 3 bis 5: schematische perspektivische Darstellungen von Montageschritten des Innenschalungsabschnitts von Fig. 2;
- Fig. 6: eine vergrößerte perspektivische Darstellung eines an einem Streifenelement angebrachten Spannhakens in größerem Detail;
- Fig. 7: eine perspektivische Darstellung eines Abschnitts des montierten Hauptteils des Innenschalungsabschnitts, im Bereich eines Druckaufnahmerings;
- Fig. 8: eine perspektivische Darstellung eines Ausschnitts des montierten Hauptteils des Innenschalungsabschnitts, im Bereich des Oberrandes;
- Fig. 9: eine perspektivische Darstellung des Kletterrings;
- Fig. 10: eine perspektivische Darstellung eines Teils des fertig montierten Innenschalungsabschnitts, im Verbindungsbereich des Kletterrings mit dem Hauptteil;
- Fig. 11 bis Fig. 13: schematische vertikale Längsschnitte durch einen mittels des erfindungsgemäßen Innenschalungsabschnitts zu erstellenden Bauwerksabschnitt in verschiedenen Bauphasen (wobei nur die in der Schnittebene liegenden Teile dargestellt sind);
- Fig. 14: ein vergrößertes Detail A von Fig. 11.

Die Fig. weisen unterschiedliche Maßstäbe auf.

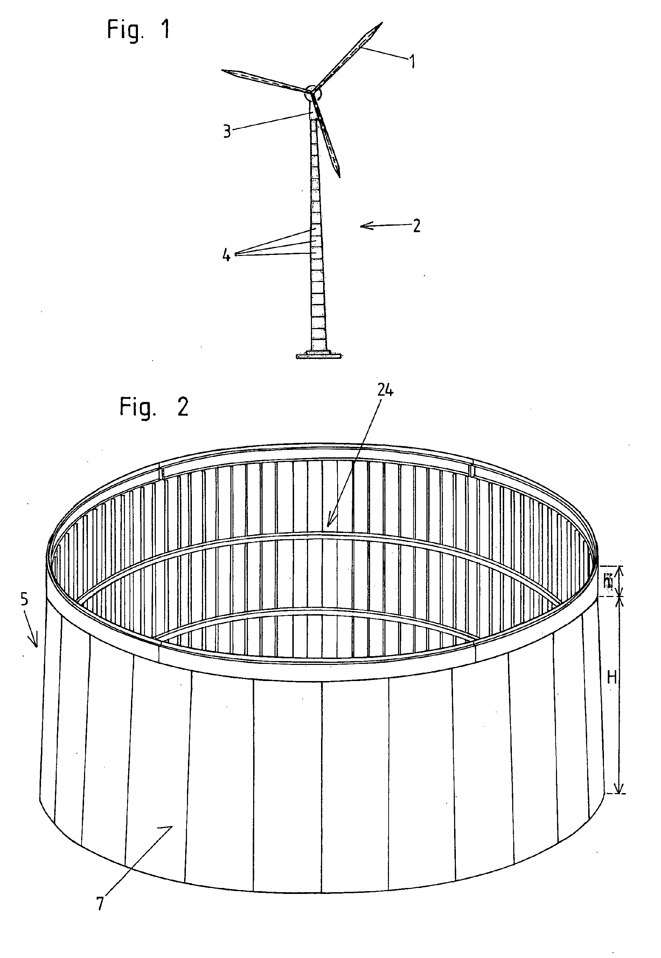

Der in Fig. 1 schematisch dargestellte Windturm weist ein Windrad 1 auf, das auf einem kegelstumpfförmigen bzw. konischen Bauwerk 2 aus Stahlbeton in Form eines Stahlbetonturms gelagert ist. Dazu ist auf der Spitze des Stahlbetonturms eine Kappe 3 aus Stahlblech angebracht, welche das Windrad 1 trägt. Das Bauwerk 2 kann beispielsweise an seinem oberen Ende einen Durchmesser von 1,8m und an seiner Basis einen Durchmesser im Bereich von 5,8m aufweisen. Das Bauwerk 2 wird in einzelnen Betonierschritten errichtet, die in Fig. 1 durch die waagerechten Linien angedeutet sind und jeweils eine Höhe von beispielsweise 4 bis 5m aufweisen. In jeden Betonierschritt wird ein Bauwerksabschnitt 4 mit einer umfangsgeschlossenen Betonwand errichtet, deren Umfang am oberen Ende des jeweiligen Bauwerksabschnitts 4 kleiner als an dessen unteren Ende ist. Im gezeigten Ausführungsbeispiel weisen alle Bauwerksabschnitte 4 eine kegelstumpfförmige Form auf, wobei sich der Kegelstumpf von unten nach oben verjüngt.

In Fig. 2 ist ein Ausführungsbeispiel eines erfindungsgemäßen Innenschalungsabschnitts vereinfacht dargestellt. Der im gezeigten Ausführungsbeispiel runde Innenschalungsabschnitt besitzt einen umfangsgeschlossenen (im gezeigten Ausführungsbeispiel runden) Hauptteil 5, an dessen oberen Ende ein umfangsgeschlossener (im gezeigten Ausführungsbeispiel runder) Kletterring 6 lösbar befestigt ist. Die lösbare Befestigung kann beispielsweise mittels Verschraubungen oder mittels Klemmteilen erfolgen, wie weiter unten noch genauer erläutert wird. Die (im gezeigten Ausführungsbeispiel im Querschnitt kreisrunde) Schalhaut des Innenschalungsabschnitts wird von allen dessen äußere Oberfläche 7 bildenden Teilen gebildet. Das Hauptteil 5 trägt hierbei zum Großteil der Schalhaut bei. Ein demgegenüber kleinerer Teil der Schalhaut wird auch vom Kletterring 6 gebildet. Die vom Kletterring 6 gebildete Höhe h der Schalhaut beträgt vorzugsweise weniger als 1/10 der vom Hauptteil 5 gebildeten Höhe H der Schalhaut.

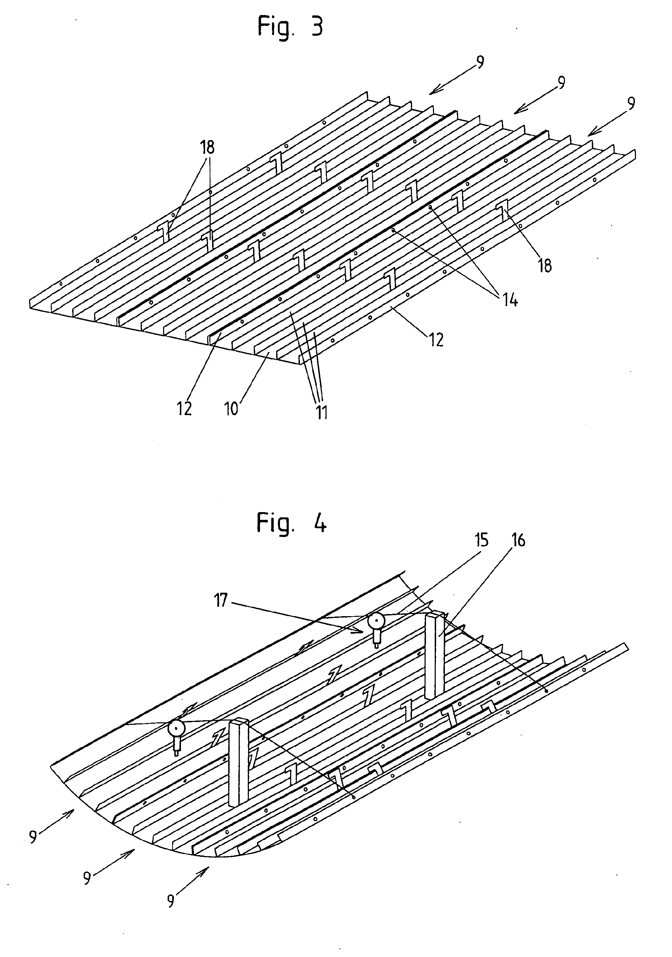

Das Hauptteil 5 wird aus einer Mehrzahl von Streifenelementen 9 aufgebaut, wie dies im Folgenden insbesondere anhand der Fig. 3 bis 5 erläutert wird. Die Streifenelemente 9 weisen jeweils streifenförmige in der Einsatzstellung vertikal verlaufende Schalhautabschnitte 10 auf, an deren von der zu errichtenden Betonwand abgewandten Rückseiten in der Einsatzstellung vertikal verlaufende nach innen abstehende Rippen 11, 12 angebracht sind. Diese können von angeschweißten oder auch angeschraubten Stegen oder Schienen gebildet werden und stehen vorzugsweise senkrecht zu den Schalhautabschnitten 10 von diesen ab, wobei sie bevorzugter Weise über die gesamte Höhe des Hauptteils 5 verlaufen. Zwei dieser Rippen 12 verlaufen an den beiden Seitenrändern des jeweiligen Streifenelements 9 und liegen vorzugsweise bündig mit den stirnseitigen Enden des Schalhautabschnitts 10. Die randseitigen Rippen 12 können beispielsweise auch durch Umbördelungen der aus Blech bestehenden Schalhautabschnitte 10 gebildet werden.

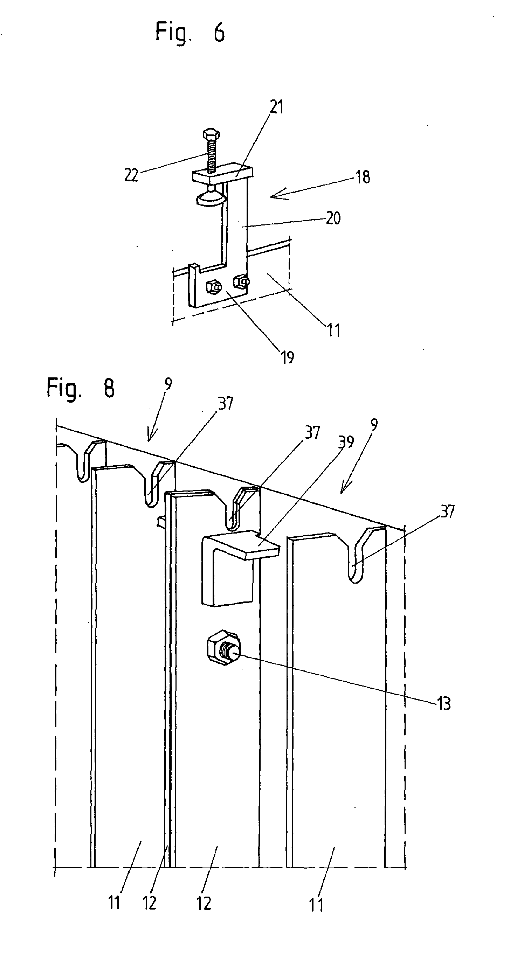

Zur Montage des Hauptteils 5 werden zunächst mehrere, beispielsweise drei Streifenelemente 9 nebeneinander auf dem Boden ausgelegt und an ihren randseitigen Rippen 12 durch Schraubbolzen 13 (vgl. Fig. 8), welche Bohrungen 14 in den randseitigen Rippen 12 durchsetzen miteinander verschraubt. In den Fig. 3 bis 5 sind der Einfachheit halber nur die Bohrungen 14, nicht aber die Schraubbolzen 13 zur Verschraubung der aneinander anliegenden Streifenelemente dargestellt.

Zur Krümmung der miteinander verbundenen Streifenelemente wird mindestens ein Seil 15 im Bereich der beiden Seitenränder des aus den mehreren Streifenelementen 9 gebildeten Elements angebracht. Dieses Seil 15 ist zunächst noch derart lose, dass ein Abstandshalter 16 etwa in der Mitte des Seils 15 zwischen dem Streifenelement 9 und dem Seil 15 eingeschoben werden kann. In der Folge wird das Seil 15 mittels einer in Fig. schematisch angedeuteten Winde 17 verkürzt, wobei sich das gebildete Element krümmt, wie dies in Fig. 4 dargestellt ist. Vorteilhafterweise sind mindestens 2 in Richtung der Längserstreckung der Seitenränder voneinander beabstandete Seile 15 mit Abstandshaltern 16 und Winden 17 vorgesehen. Anstelle von Seilen 15 können auch Ketten oder andere Zugmittel verwendet werden.

An den Streifenelementen 9 sind Spannhaken 18 angebracht, welche in den Fig. 3 bis 5 nur schematisch dargestellt sind. Eine genauere Ausbildung eines Ausführungsbeispiels eines solchen Spannhakens geht aus Fig. 6 hervor. Der Spannhaken 18 ist U-förmig ausgebildet, wobei ein Seitenschenkel 19 an einer Rippe 11 des Streifenelements 9 angeschraubt ist. Der Basisschenkel 20 steht in Verlängerungsrichtung der Rippe 11 vom Schalhautabschnitt 10 ab und der andere Seitenschenkel 21 wird von einer Spannschraube 22 durchsetzt.

Die Spannhaken 18 dienen zur Befestigung von Segmenten 23 von Druckaufnahmeringen 24 an den Streifenelementen 9. Insgesamt werden durch die im fertig gestellten Zustand des Innenschalungsabschnitts miteinander verbundenen Segmente 23 umfangsgeschlossene, vorzugsweise kreisförmige, Druckaufnahmeringe 24 ausgebildet, welche in der Einsatzstellung des Innenschalungsabschnitts in einer horizontalen Ebene liegen. Der Innenschalungsabschnitt weist mindestens einen solchen Druckaufnahmering 24 auf. Vorzugsweise sind mindestens zwei in der Höhe (bezogen auf die Einsatzstellung) voneinander beabstandete Druckaufnahmeringe 24 vorhanden. Ein jeweiliger Druckaufnahmering 24 wird mit zumindest einigen der Streifenelemente 9, vorzugsweise mit allen Streifenelementen 9 lösbar verbunden, zu welchem Zweck im gezeigten Ausführungsbeispiel die an den Rippen 11 angebrachten Spannhaken 18 vorhanden sind. Es ist bevorzugt, dass für jedes Streifenelement mindestens zwei an unterschiedlichen Rippen 11, 12 angebrachte Spannhaken 18 vorhanden sind.

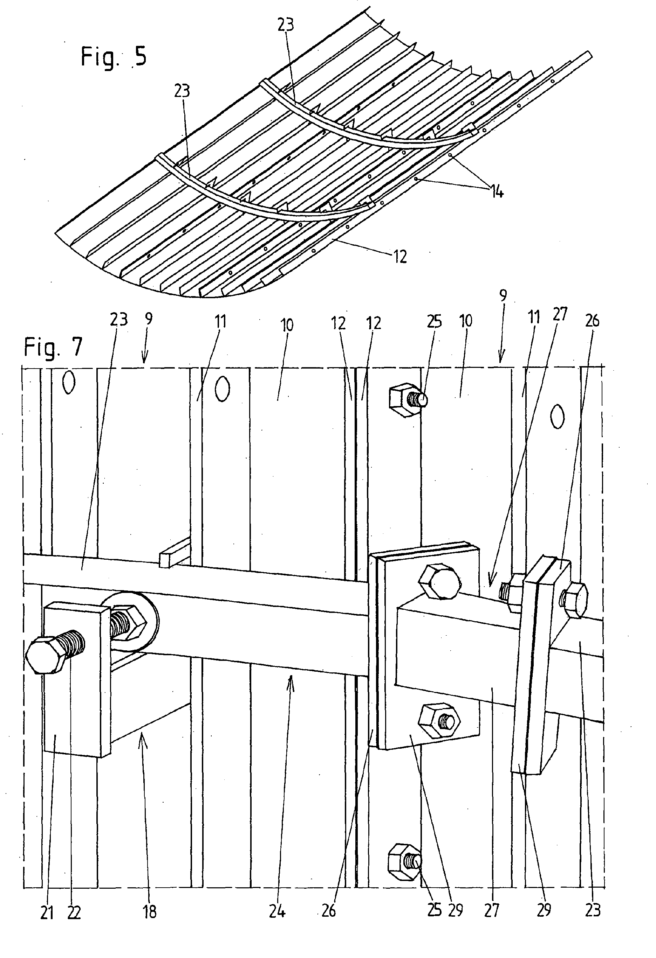

Die Segmente 23 der Druckaufnahmeringe 24 sind entsprechend vorgekrümmt und werden in die Spannhaken 18 der beispielsweise auf die in Fig. 4 dargestellte Art und Weise gekrümmten, aus mehreren Streifenelementen 9 bestehenden Elemente eingelegt, wobei die Spannschrauben 22 zunächst noch geöffnet sind. In der Folge werden die Spannschrauben 22 zugedreht, sodass die Segmente 23 an die von den Schalhautabschnitten 10 abgewandten Enden der Rippen 11, 12 angedrückt werden. Ein solcher Art liegend vormontiertes Element ist in Fig. 5 schematisch dargestellt. Dieses Element wird in der Folge aufgerichtet und mehrere derartige Elemente werden zum umfangsgeschlossenen Hauptteil 5 miteinander verbunden. Hierzu werden die randseitigen Rippen 12 der randseitigen Streifenelemente 9 der Elemente miteinander verschraubt, und zwar in analoger Weise wie die Streifenelemente bei der Ausbildung des in Fig. 5 dargestellten Elements mittels Schraubbolzen 25, welche Bohrungen 14 in den Rippen 12 durchsetzen (vgl. Fig. 7). Die Segmente 23 werden ebenfalls miteinander verbunden. Hierzu können an den Enden der Segmente 23 Flanschplatten 26 angeschweißt sein, welche direkt oder unter Zwischenschaltung von Zwischenstücken 27 miteinander verschraubt werden. Eine Verschraubung über ein Zwischenstück 27 ist in Fig. 7 dargestellt. Das Zwischenstück besitzt ein Leistenstück 28, an welchem beidseitig Flanschplatten 29 angeschraubt sind, die mit den Flanschplatten 26 der Segmente 23 verschraubt werden. Die Flanschplatten 29 an den beiden Enden des Leistenstücks 28 stehen V-förmig zueinander und die Flanschplatten 26 sind entsprechend ausgerichtet, um das spätere Auseinandernehmen des Druckaufnahmerings 24 nach dem Betonieren zu erleichtern.

Insgesamt wird auf diese Weise das umfangsgeschlossene Hauptteil 5 ausgebildet. Im gezeigten Ausführungsbeispiel ist der Umfang des Hauptteils an seinem oberen Ende kleiner als an seinem unteren Ende. Um dies zu erreichen, nimmt zumindest bei einem Teil der Streifenelemente 9 die Breite über ihre Längsausdehnung von unten nach oben ab. Diese Streifenelemente besitzen also eine in Ansicht gesehen sich von unten nach oben konisch verjüngende Form bzw. eine trapezförmige Form (vorzugsweise ein gleichschenkeliges Trapez). Die restlichen Streifenelemente können eine gleich bleibende Breite aufweisen, also in Ansicht gesehen rechteckig ausgebildet sein. Es wäre auch denkbar und möglich, dass alle Streifenelemente sich konisch verjüngend bzw. trapezförmig ausgebildet sind.

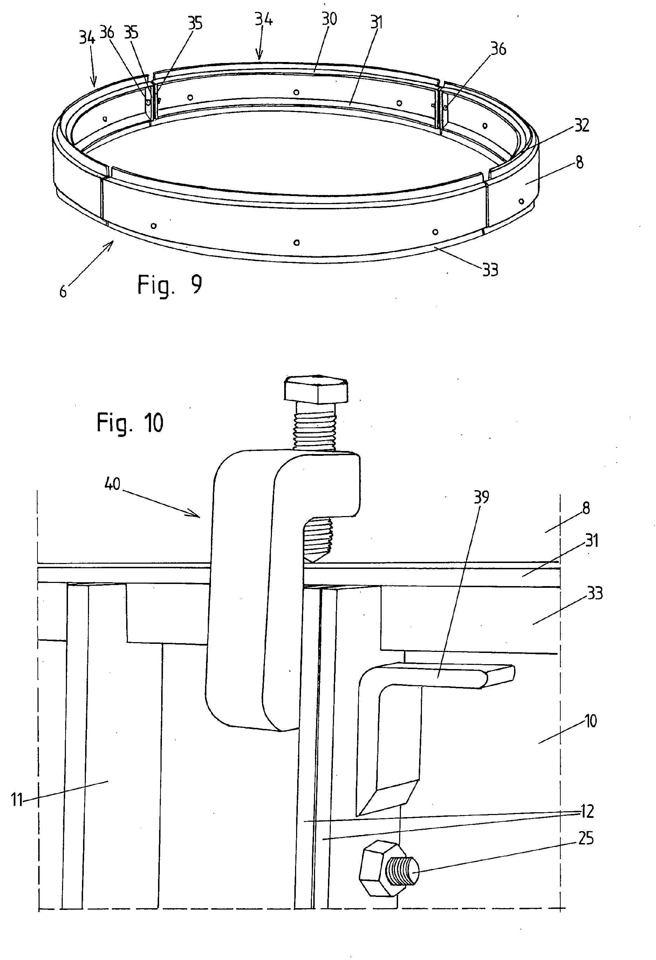

Zur Fertigstellung des Innenschalungsabschnitts wird am oberen Ende des Hauptteils 5 der Kletterring 6 befestigt. Der Kletterring 6 besitzt im gezeigten Ausführungsbeispiel wie in Fig. 9 dargestellt einen vertikalen Steg 8, der einen Teil der Schalhaut des Innenschalungsabschnitts bildet und an dem am oberen und am unteren Ende nach innen abstehende Horizontalstege 30, 31 angebracht sind, sodass die Stege 8, 30 und 31 zusammen eine U-förmige Querschnittsform aufweisen. Am oberen Horizontalsteg 30 ist eine nach oben abstehende federartige Leiste 32 und am unteren Horizontalsteg 31 ist eine nach unten abstehende federartige Leiste 33 angebracht, wobei die Leisten 32, 33 radial weiter innen als der Steg 8 liegen und beispielsweise an den Horizontalstegen 30, 31 angeschweißt sind. Die Leisten 32, 33 erstrecken sich über den Großteil des Umfangs des Kletterrings 6. Der Kletterring 6 besteht aus mehreren Segmenten 34, welche miteinander verschraubt (oder verklemmt) sind. Im gezeigten Ausführungsbeispiel sind an den Enden der Segmente 34 jeweils zwischen den Horizontalstegen 30, 31 verlaufende Flanschplatten 35 angeordnet, welche mittels Bohrungen in den Flanschplatten 35 durchsetzenden Schraubbolzen 36 verschraubt sind. Im Anschlussbereich von zwei Segmenten 34 weisen die Leisten 32, 33 Unterbrechungen auf.

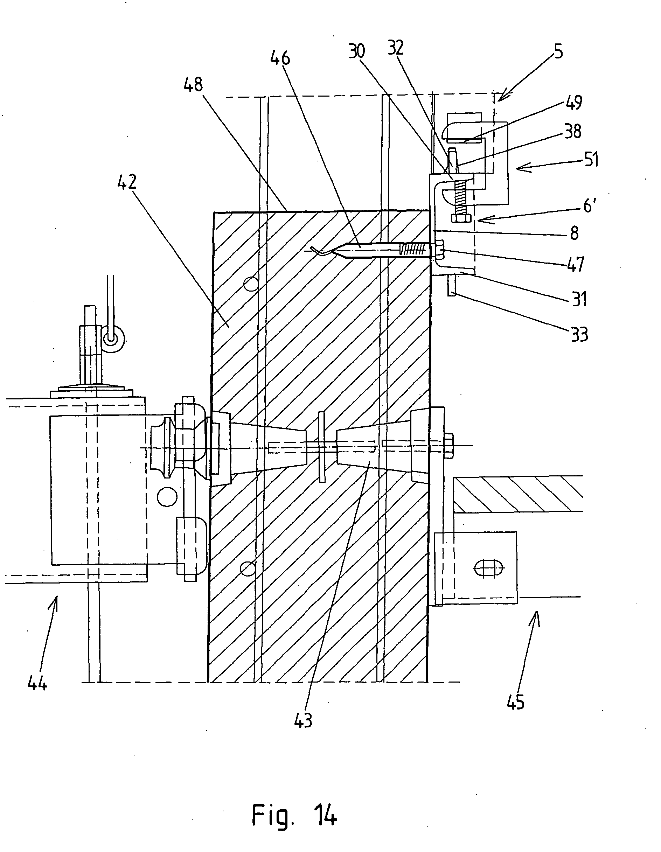

Die Rippen 11, 12 der Streifenelemente 9 besitzen in ihren oberen und unteren Endbereichen Schlitze 37, 38 (vgl. Fig. 8 und Fig. 14; die Schlitze sind in den Fig. 3 bis 5 der Einfachheit nicht dargestellt). Die Schlitze 37 in den oberen Endbereichen gehen von den oberen stirnseitigen Enden der Rippen 11, 12 aus und besitzen einen V-förmig erweiterten Einfahrbereich, wie dies aus Fig. 8 ersichtlich ist. Die von den unteren stirnseitigen Enden der Rippen 11, 12 ausgehenden Schlitze 38 in den unteren Endbereichen der Rippen 11, 12 sind in analoger Weise ausgebildet. Zum Verbinden des Kletterrings wird dieser auf das obere Ende des Hauptteils 5 aufgesetzt, wobei seine nach unten abstehende Leiste 33 in die Schlitze 37 eingeführt wird. An einigen der Rippen 11, 12, beispielsweise an den randseitigen Rippen 12 sind Winkel 39 angebracht. Zumindest einige der Winkel 39 werden mit dem unteren Horizontalsteg 31 des Kletterrings 6 mittels Klemmen 40 verspannt, wie dies in Fig. 10 dargestellt ist, wobei der untere Horizontalsteg 31 auf den oberen stirnseitigen Enden der Rippen 11, 12 aufliegt. Anstelle einer Klemmverbindung wäre auch eine Verschraubung zur lösbaren Befestigung des Kletterrings 6 am Hauptteil 5 denkbar und möglich.

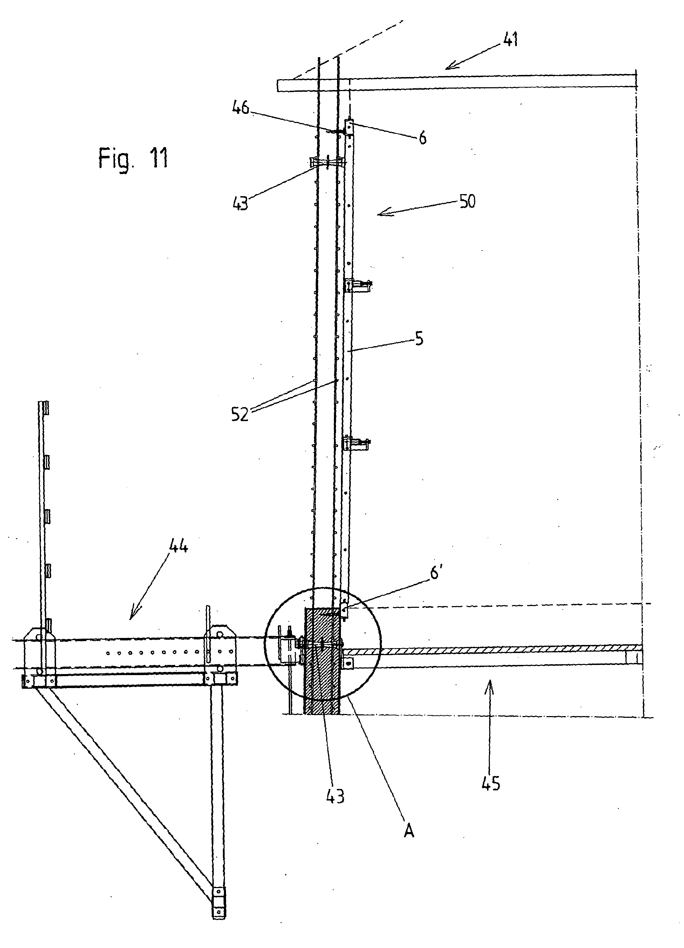

Ein derartiger fertig gestellter Innenschalungsabschnitt kann in der Folge bei der Errichtung eines Bauwerksabschnitts eingesetzt werden, wie dies im Folgenden anhand der Fig. 11 bis 14 erläutert wird.

Fig. 11 zeigt die Bauphase, in welcher ein vorhergehender Bauwerksabschnitt mit der umfangsgeschlossenen Betonwand 42 bereits fertig gestellt worden ist. An der Betonwand 42 sind mittels eingemauerter Anker 43 eine innere und eine äußere Arbeitsplattform 44, 45 befestigt, deren Ausbildung im vorliegenden Zusammenhang nicht im Einzelnen erläutert zu werden braucht. An der Betonwand 42 ist weiters der Kletterring 6' des bei der Errichtung des vorhergehenden Bauwerksabschnitts eingesetzten Innenschalungsabschnitts angebracht. Hierzu sind Dübel 46 (vgl. Fig. 14) in die Betonwand 42 eingemauert, in die den vertikalen Steg 8 des Kletterrings 6' durchsetzende Schraubbolzen 47 eingedreht sind. Der vertikale Steg 8 des Kletterrings steht hierbei über den Oberrand 48 des fertiggestellten Abschnitts der Betonwand 42 etwas vor.

Auf diesen an der Betonwand 42 angebrachten Kletterring 6' wird nunmehr mittels eines Hebezeuges 41 der Innenschalungsabschnitt 50 für den nächsten zu errichtenden Bauwerksabschnitt aufgesetzt, wie dies aus Fig. 11 ersichtlich ist. Hierzu werden die Schlitze 38 an den unteren Enden der Rippen 11, 12 in die nach oben abstehende Leiste 32 des Kletterrings 6' eingeführt und die unteren Stirnseiten der Rippen 11, 12 auf den oberen Horizontalsteg 30 des Kletterrings 6' aufgesetzt. Zur Befestigung des Innenschalungsabschnitts 50 am Kletterring 6' werden an einigen der Rippen 11, 12, beispielsweise an den Rippen 12 angebrachte Winkel 49 (die in ihrer Funktion analog zu den Winkeln 39 sind) mittels Klemmen 51 mit dem oberen Horizontalsteg 30 des Kletterrings 6' verspannt. Anstelle eines Verklemmens wäre wiederum eine Verschraubung zwischen dem Kletterring 6' und dem Hauptteil 5 zur lösbaren Befestigung denkbar und möglich.

Vorzugsweise ist am Innenschalungsabschnitt 50 bereits bei seinem Anheben mittels des Hebezeuges 41 und Aufsetzen auf den Kletterring 6' eine Armierung 52 mit daran angebrachten Einbauteilen, beispielsweise Ankern 43 angebracht. Die Anbringung der Armierung an den Innenschalungsabschnitt 50 kann somit bereits am Boden erfolgen. Durch Bohrungen im am oberen Ende des Hauptteils 5 befestigten Kletterring 6 des Innenschalungsabschnitts 50 sind weiters Schraubbolzen durchgeführt und in Dübel 46 eingeschraubt, welche beim späteren Betonieren einbetoniert werden, um den Kletterring 6 an der herzustellenden Betonwand zu befestigen.

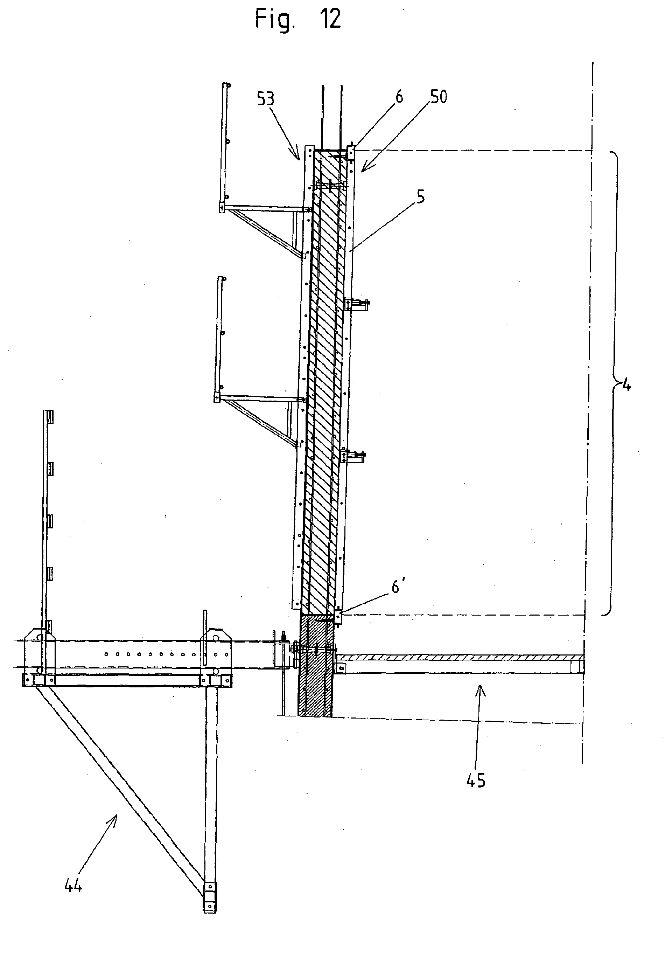

In der Folge wird ein Außenschalungsabschnitt 53 angebracht und der zwischen dem Innenschalungsabschnitt 50 und dem Außenschalungsabschnitt 53 liegende Raum mit Beton vergossen, um den Bauwerksabschnitt 4 herzustellen. Die Bauphase nach dem Betonieren ist in Fig. 12 dargestellt. Der Außenschalungsabschnitt 53 kann hierbei in herkömmlicher Weise ausgebildet sein. Der Außenschalungsabschnitt kann hierbei ebenfalls aus Streifenelementen bestehen und in der Art und Weise ausgebildet sein, wie dies beispielsweise aus der eingangs genannten EP 1 156 175 A2 bekannt ist, ausgebildet sein. Der Außenschalungsabschnitt ist hierbei ohne Kletterringe 6 und ohne horizontal verlaufende aussteifende Schienen ausgebildet, da die Außenschalung nur auf Zug belastet wird und Zugkräfte wesentlich einfacher aufzunehmen sind als Druckkräfte. Mit anderen Worten benötigt die Außenschalung keine biegesteife und formgebende Tragkonstruktion, wie diese beim Innenschalungsabschnitt durch den mindestens einen Druckaufnahmering 24 und die Kletterringe 6, 6' gebildet wird.

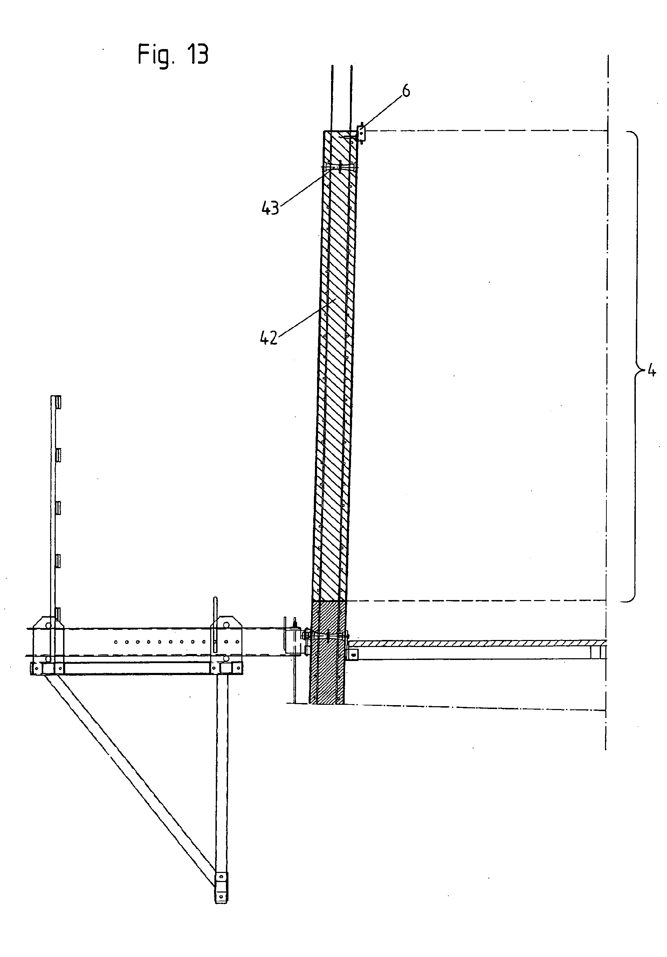

Nachdem der Beton des erstellten Bauwerksabschnitts soweit ausgehärtet ist, dass er selbsttragend ist, kann der Außenschalungsabschnitt 53 abgenommen werden. Weiters wird der Kletterring 6' des zum vorhergehenden Bauwerksabschnitt gehörenden Innenschalungsabschnitt abgenommen, indem die Schraubbolzen 47 herausgedreht werden und der Kletterring 6' in seine Segmente 34 zerlegt wird. In der Folge wird das Hauptteil 5 abgenommen, das am an seinem oberen Ende befestigten Kletterrings 6 hängt. Hierzu werden nach der Abnahme der Druckaufnahmeringe 4 zunächst einzelne Streifenelemente 9 auseinandergeschraubt (wobei zur Erleichterung des Auseinandernehmens ein Streifenelement 9 analog zu den Flanschplatten 29 V-förmige randseitige Rippen 12 aufweisen könnte, welche an entsprechenden randseitigen Rippen der benachbarten Streifenelemente 9 anliegen könnte; auch ein gegenüber den Streifenelementen 9 schmaleres Zwischenelement könnte vorgesehen sein) und in der Folge wird die Verbindung dieser Streifenelemente 9 mit dem Kletterring 6 gelöst. Der Kletterring 6 bleibt am fertig gestellten Abschnitt der Betonwand 42 befestigt, um als Auflager für den Innenschalungsabschnitt des nächsten Bauwerksabschnitts zu dienen. Diese Bauphase ist in Fig. 13 dargestellt. In der Folge werden die innere Arbeitsplattform und die äußere Arbeitsplattform 44, 45 hinaufgesetzt und an den im nunmehr fertig gestellten Abschnitt der Betonwand 42 eingemauerten Anker 43 befestigt.

Zur Errichtung des nächsten Bauwerksabschnitts wird der nächste Innenschalungsabschnitt in analoger Weise montiert und in der Folge auf den Kletterring 6 aufgesetzt. Es können bei der Montage dieses Innenschalungsabschnitts Streifenelemente eingesetzt werden, welche bereits bei einem Innenschalungsabschnitt für einen früheren Bauwerksabschnitt eingesetzt worden sind, wobei entsprechend dem gewünschten Radius und der gewünschten Form der Innenschalung die Streifenelemente 9 entsprechend zusammengesetzt werden. Bei der Errichtung eines insgesamt kegelstumpfförmigen Bauwerkes können beispielsweise bei jedem Bauwerksabschnitt einige der rechteckigen Streifenelemente herausgenommen werden, sodass am Schluss (beim obersten Bauwerksabschnitt) nur noch trapezförmige Streifenelemente vorhanden sind. Kletterringe 6 und Druckaufnahmeringe 24 sind für den jeweils erforderlichen Durchmesser vorhanden. Bei einem über die Höhe des Bauwerks kontinuierlich abnehmenden Radius werden somit für jeden Innenschalungsabschnitt ein eigener Kletterring 6 und mindestens ein eigener Druckaufnahmering 24 eingesetzt. Insgesamt ergibt sich dennoch gegenüber jeweils fix ausgebildeten Innenschalungsabschnitten eine beträchtliche Materialersparnis.

Zur Optimierung des zeitlichen Ablaufs kann vorteilhafterweise vorgesehen sein, mit mindestens zwei, vorzugsweise mit drei Innenschalungsabschnitten gleichzeitig zu arbeiten. Hierbei kann gleichzeitig an einem ersten Innenschalungsabschnitt der Umbau, d. h. seine Montage für den vorgesehenen Bauwerksabschnitt durchgeführt werden, ein zweiter, bereits umgebauter Innenschalungsabschnitt kann armiert werden und ein dritter Innenschalungsabschnitt kann sich im Einsatz beim Betonieren befinden.

Bei einem erfindungsgemäßen Innenschalungssystem wird eine hohe Arbeitssicherheit erreicht, da ein Großteil der Arbeiten am Boden durchgeführt werden kann. In der Höhe müssen nur das Aufsetzen und Abnehmen der Innenschalungsabschnitte und das Betonieren ausgeführt werden, während die Montageund Armierungsarbeiten an den Innenschalungsabschnitten am Boden durchgeführt werden können.

Ein erfindungsgemäßes Innenschalungssystem ist im Besonderen bei höheren Bauwerken und/oder bei nicht leicht erreichbaren Bauwerken von Vorteil.

Unterschiedliche Modifikationen der gezeigten Ausführungsbeispiele sind denkbar und möglich, ohne den Bereich der Erfindung zu verlassen. So kann ein unter Einsatz eines erfindungsgemäßen Innenschalungssystems zu errichtendes Bauwerk neben Bauwerksabschnitten, deren Umfang sich über die Höhe des Bauwerksabschnitts ändert auch solche mit konstantem Umfang besitzen.

### Legende zu den Hinweisziffern:

- 1: Windrad
- 2: Bauwerk
- 3: Kappe
- 4: Bauwerksabschnitt
- 5: Hauptteil
- 6, 6': Kletterring
- 7: äußere Oberfläche
- 8: Steg
- 9: Streifenelement
- 10: Schalhautabschnitt
- 11: Rippe
- 12: Rippe
- 13: Schraubbolzen
- 14: Bohrung
- 15: Seil
- 16: Abstandshalter
- 17: Winde
- 18: Spannhaken
- 19: Seitenschenkel
- 20: Basisschenkel
- 21: Seitenschenkel
- 22: Spannschraube
- 23: Segment
- 24: Druckaufnahmering
- 25: Schraubbolzen
- 26: Flanschplatte
- 27: Zwischenstück
- 28: Leistenstück
- 29: Flanschplatte
- 30: Horizontalsteg
- 31: Horizontalsteg
- 32: Leiste
- 33: Leiste
- 34: Segment
- 35: Flanschplatte
- 36: Schraubbolzen
- 37: Schlitz
- 38: Schlitz
- 39: Winkel
- 40: Klemme
- 41: Hebezeug
- 42: Betonwand
- 43: Anker
- 44: innere Arbeitsplattform
- 45: äußere Arbeitsplattform
- 46: Dübel
- 47: Schraubbolzen
- 48: Oberrand
- 49: Winkel
- 50: Innenschalungsabschnitt
- 51: Klemme
- 52: Armierung
- 53: Außenschalungsabschnitt

## Patentansprüche

1. Innenschalungsabschnitt zur Errichtung eines Bauwerksabschnitts (4) mit einer umfangsgeschlossenen Betonwand (42), deren Umfang über die Höhe des Bauwerksabschnitts (4) zu- oder abnimmt, wobei der Innenschalungsabschnitt ein umfangsgeschlossenes Hauptteil (5), dessen Umfang an seinem oberen Ende größer oder kleiner als an seinem unteren Ende ist, und einen am oberen Ende des Hauptteils (5) lösbar an diesem befestigten Kletterring (6) aufweist, **dadurch gekennzeichnet, dass** das Hauptteil (5) eine Mehrzahl von in Umfangsrichtung aneinander anschließenden, lösbar miteinander verbundenen Streifenelementen (9) aufweist, von denen zumindest einige über ihre Höhe zunehmende oder abnehmende Breiten aufweisen, und dass mindestens ein in der Einsatzstellung des Innenschalungsabschnitts in einer horizontalen Ebene liegender und auf der von der zu errichtenden Betonwand (42) abgewandten Seite der Streifenelemente (9) verlaufender Druckaufnahmering (24) mit zumindest einigen, vorzugsweise mit allen, der Streifenelemente (9) lösbar verbunden ist.

2. Innenschalungsabschnitt nach Anspruch 1, **dadurch gekennzeichnet, dass** die Streifenelemente (9) streifenförmige Schalhautabschnitte (10) aufweisen, an deren von der zu errichtenden Betonwand abgewandten Rückseiten in der Einsatzstellung des Innenschalungsabschnitts vertikal verlaufende, von den Schalhautabschnitten (10) abstehende Rippen (11, 12) angebracht sind.

3. Innenschalungsabschnitt nach Anspruch 2, **dadurch gekennzeichnet, dass** der mindestens eine Druckaufnahmering (24) an den von den Schalhautabschnitten (10) abgewandten Enden der Rippen (11, 12) anliegt.

4. Innenschalungsabschnitt nach Anspruch 2 oder Anspruch 3, **dadurch gekennzeichnet, dass** zwei der Rippen (12) an den beiden Seitenrändern der Streifenelemente (9) verlaufen und vorzugsweise bündig mit den stirnseitigen Enden der Schalhautabschnitte (10) liegen.

5. Innenschalungsabschnitt nach Anspruch 4, **dadurch gekennzeichnet, dass** aneinander angrenzende Streifenelemente (9) an ihren benachbarten randseitigen Rippen (12) durch Schraubbolzen (13, 25), welche durch Bohrungen (14) in den randseitigen Rippen (12) verlaufen, miteinander verschraubt sind.

6. Innenschalungsabschnitt nach Anspruch 4 oder Anspruch 5, **dadurch gekennzeichnet, dass** ein jeweiliges Streifenelement (9) zwischen seinen randseitigen Rippen (12) mehrere weitere Rippen (11) aufweist.

7. Innenschalungsabschnitt nach einem der Ansprüche 1 bis 6, **dadurch gekennzeichnet, dass** zur Verbindung des mindestens einen Druckaufnahmerings (24) mit dem jeweiligen Streifenelement (9) mindestens ein Spannhaken (18) am Streifenelement (9) angebracht ist, von dem der in den Spannhaken (18) eingelegte Druckaufnahmering (24) mittels einer Spannschraube (22) des Spannhakens gegen das Streifenelement (9) verspannbar ist.

8. Innenschalungsabschnitt nach Anspruch 7, **dadurch gekennzeichnet, dass** ein jeweiliger Spannhaken (18) an einer der abstehenden Rippen (11, 12) des jeweiligen Streifenelements (9) angebracht ist.

9. Innenschalungsabschnitt nach einem der Ansprüche 1 bis 8, **dadurch gekennzeichnet, dass** der am oberen Ende des Hauptteils (5) lösbar an diesem befestigte Kletterring (6) die Streifenelemente (9) an ihren oberen Enden formschlüssig gegen eine nach innen wirkende Kraft abstützt.

10. Innenschalungsabschnitt nach Anspruch 9, **dadurch gekennzeichnet, dass** der Klettering (6) eine in der Einsatzstellung des Innenschalungsabschnitts nach unten abstehende, sich zumindest über einen Großteil seines Umfangs erstreckende Leiste (33) aufweist, welche in Schlitze (37) eingreift, die in oberen Endbereichen von zumindest einem Großteil der Rippen (11, 12) angeordnet sind und von den oberen stirnseitigen Enden dieser Rippen (11, 12) ausgehen.

11. Innenschalungsabschnitt nach einem der Ansprüche 1 bis 10, **dadurch gekennzeichnet, dass** der Kletterring (6) eine in der Einsatzstellung des Innenschalungsabschnitts nach oben abstehende, sich zumindest über den Großteil seines Umfangs erstreckende Leiste (32) aufweist.

12. Innenschalungsabschnitt nach 11, **dadurch gekennzeichnet, dass** zumindest ein Großteil der Rippen (11, 12) der Streifenelemente (9) in ihren unteren Endbereichen Schlitze (38) zur Aufnahme der nach oben abstehenden Leiste (32) des an der Betonwand (42) befestigten Kletterrings (6') des zur Herstellung des vorhergehenden Bauwerksabschnitts eingesetzten Innenschalungsabschnitts aufweisen.

13. Innenschalungssystem zur Errichtung eines Bauwerks (2) in mehreren Betonierschritten, in welchen jeweils ein Bauwerksabschnitt (4) mit Hilfe eines aus dem Innenschalungssystem gebildeten Innenschalungsabschnittes (50) errichtet wird, wobei zumindest einige der Bauwerksabschnitte (4) einen über ihre Höhe zu- oder abnehmenden Umfang aufweisen und der zugehörige Innenschalungsabschnitt (50) ein umfangsgeschlossenes Hauptteil (5), dessen Umfang an seinem oberen Ende größer oder kleiner als an seinem unteren Ende ist, und einen am oberen Ende des Hauptteils (5) lösbar an diesem befestigten Kletterring (6) aufweist, **dadurch gekennzeichnet, dass** zur Ausbildung des Hauptteils (5) eines jeweiligen Innenschalungsabschnitts (50) eine Mehrzahl von Streifenelementen (9) vorhanden ist, die in Umfangsrichtung aneinander anschließend lösbar miteinander verbindbar sind und von denen zumindest einige über ihre Höhe abnehmende oder zunehmende Breiten aufweisen, und dass das Innenschalungssystem für jeden der zu bildenden Innenschalungsabschnitte (50) mindestens einen Druckaufnahmering (24) mit einem an den zu bildenden Innenschalungsabschnitt angepassten Durchmesser aufweist, der in einer in der Einsatzstellung des Innenschalungsabschnitts horizontalen Anordnung auf der von der zu errichtenden Betonwand (42) abgewandten Seite der Streifenelemente (9) lösbar mit zumindest einigen der Streifenelemente (9) verbindbar ist.

14. Innenschalungssystem nach Anspruch 13, **dadurch gekennzeichnet, dass** das Innenschalungssystem für jeden der zu bildenden Innenschalungsabschnitte einen Kletterring (6, 6') mit einem an den jeweiligen Innenschalungsabschnitt (50) angepassten Durchmesser aufweist.
